# EUROPEAN PATENT APPLICATION

(11) **EP 3 205 804 A1**
(43) Date of publication of application: **16.08.2017**
(21) Application number: 17154863.9
(22) Date of filing: 06.02.2017
(51) Int. Cl.: E05F 15/695

(54) **SLACK REMOVAL METHOD FOR VEHICLE WINDOW ANTI-PINCH SYSTEM**

(30) Priority: 11.02.2016 US 201615041343
(71) Applicant: Delphi Technologies, Inc., Troy, MI 48007 (US)
(72) Inventor: HAWES, Kevin J., Greentown, Indiana 46936 (US); CHAMPION, Douglas R., Kokomo, Indiana 46902 (US); CANALES, Salvador A., 32540 Ciudad Juarez (MX); SUGIARTO, Tanto, West Lafayette, Indiana 47906 (US)
(74) Representative: Delphi France SAS

(57) **Abstract**

A window-anti-pinch system (30) suitable to operate a powered-window (16) in a vehicle includes a motor (14) and a controller (36). The motor (14) is coupled to a window (16) by an apparatus (18). The motor (14) is operable to raise the window (16) when the motor (14) is operated in a first-direction (22) and lower the window (16) when the motor (14) is operated in a second-direction (26) opposite the first-direction (22). The apparatus (18) is characterized by slack between the motor (14) and the window (16). The controller (36) is in communication with the motor (14). The controller (36) is configured to apply a slack-removal-signal (40) to the motor (14) prior to operation of the motor (14) to raise the window (16) when a most-recent-operation of the motor (14) was effective to lower the window (16). The slack-removal-signal (40) is a predetermined-waveform effective to operate the motor (14) in the first-direction (22) to take-up the slack but not raise the window (16).

## Description

### TECHNICAL FIELD

This disclosure generally relates to a powered window-anti-pinch system, and more particularly relates to applying a slack-removal-signal to a window motor prior to operation of the motor to raise the window. The slack-removal-signal is a predetermined-waveform effective to operate the motor in the first-direction to take-up the slack but not raise the window.

### BACKGROUND OF INVENTION

It is known for a window pinch detection system to rely on a change in motor speed to indicate when an object such as a hand or arm is being pinched by a closing window. This method is used reliably when the motor is a rather steady state condition such as after the slack has been taken up by the motor. However, when the window is moved downward, slack or play is typically present in the apparatus that couples the motor to the window that must be taken-up before the window can be raised. As such, the next up motion yields a motor wind up due to slack causing a no load condition for the motor, followed by a loading of the motor by the window lift mechanism (motor gearing lash, cable lash, window holder lash, rotation or window). It has been proposed to disable the pinch detection for some predetermine startup time and/or distance. However, with this disabling of the pinch detection system, finger pinches may occur especially with small gaps such as when the window is nearly closed.

### SUMMARY OF THE INVENTION

Described herein is a more robust pinch detection system with pinch detection active during first movements of window-up motion that eliminates the windup by implementing a windup removal procedure at end of window down events or immediately prior moving the window upward. The windup distance may be characterized dynamically into a stored table during reversal processes. The windup may be estimated differently between hard stop (bottom of window), and a soft stop (middle window). After a window down event initiated by the operator, the process is applied to the motor to take the mechanical slack.

In accordance with one embodiment, a window-anti-pinch system suitable to operate a powered-window in a vehicle is provided. The system includes a motor and a controller. The motor is coupled to a window by an apparatus. The motor is operable to raise the window when the motor is operated in a first-direction and lower the window when the motor is operated in a second-direction opposite the first-direction. The apparatus is characterized by slack between the motor and the window. The controller is in communication with the motor. The controller is configured to apply a slack-removal-signal to the motor prior to operation of the motor to raise the window when a most-recent-operation of the motor was effective to lower the window. The slack-removal-signal is a predetermined-waveform effective to operate the motor in the first-direction to take-up the slack but not raise the window.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a cut-away view of a powered window assembly for a vehicle in accordance with one embodiment;
Fig. 2 is a diagram of a system for operating the powered window assembly of Fig. 1 in accordance with one embodiment; and
Fig. 3 is illustration of a signal present in the system of Fig. 2 in accordance with one embodiment.

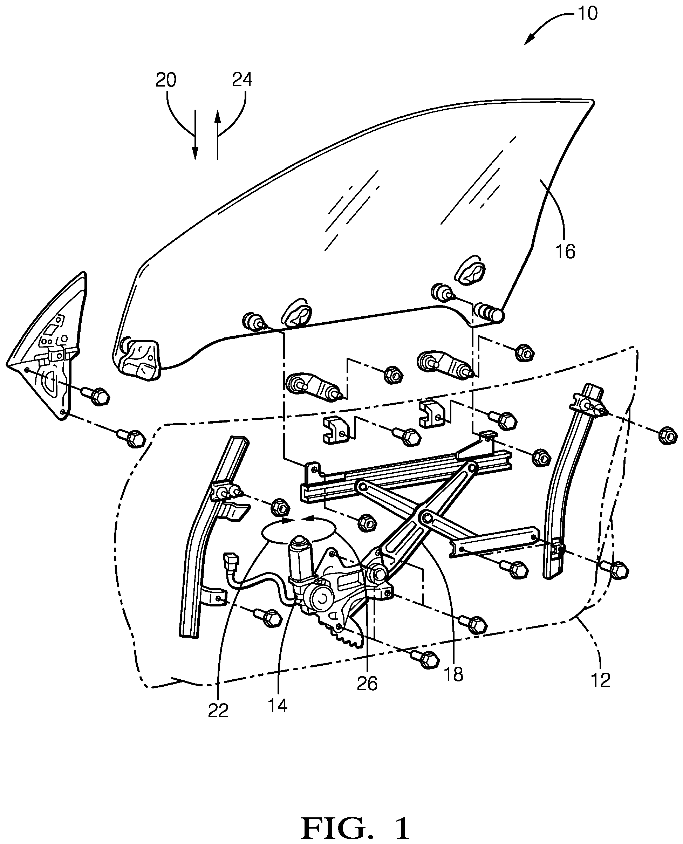

Fig. 1 illustrates a non-limiting example of a powered-window assembly 10 installed in a door 12 of a vehicle (not shown). In general, the assembly 10 includes an electric motor, hereafter the motor 14, which is coupled to a window 16 by an apparatus 18, which is sometimes referred to as a window regulator. The apparatus 18 couples the motor 14 to the window 16 such that the motor 14 is operable to raise the window 16 in an upward-direction 20 when, for example, the motor 14 is operated in a first-direction 22, e.g. forward or clockwise (CW), and lower the window 16 in a downward-direction 24 when the motor is operated in a second-direction 26, e.g. backward, reverse, or counter-clockwise (CCW). It is noted that the second-direction 26 is opposite the first-direction 22.

As will be recognized by those in the art, it is typical that the apparatus 18 has, or is characterized by, some amount of slack (i.e. - slop, play, lash, etc.) between the motor 14 and the window 16. That is, in some instances the motor 14, or more specifically the rotor of the motor 14, may move (i.e. rotate) an incremental or small amount without any corresponding movement of the window 16. It will also be recognized that the reverse may be true where the apparatus 18 may allow for some incremental upward or downward movement of the window 16 without any corresponding movement of the window 16. In the former instance, since the motor 14 may move without a corresponding movement of the window 16, the motor 14 is operated in what is commonly called an unloaded condition since the motor 14 is not doing any substantive work other than taking up slack in the apparatus 18 when moving.

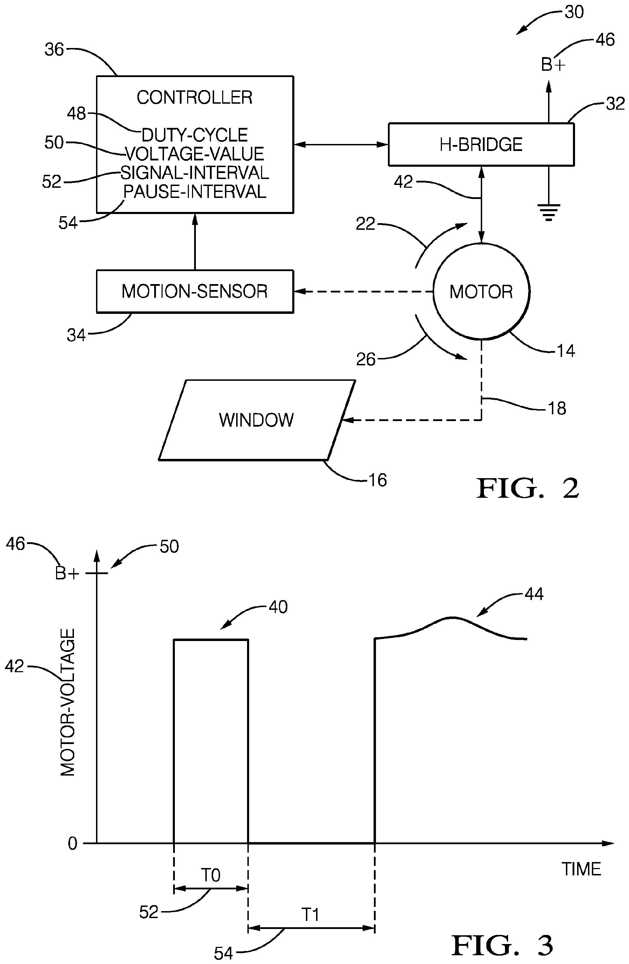

When the motor 14 is unloaded (i.e. merely taking up slack) the acceleration/speed of the motor 14 is increased for a given excitation signal when compared to a loaded condition. The sudden deceleration of the motor 14 at the instant that the slack is taken up may be incorrectly interpreted as being due to an object being pitched by the window 16. To overcome this problem, the system 30 (Fig. 2) described herein takes steps to take up any slack in the apparatus 18 before engaging pinch-detection algorithms.

Fig. 2 further illustrates features of a window-anti-pinch system 30, hereafter the system 30 that is suitable to operate a powered-window (e.g. the window 16) in a vehicle. The system includes the motor 14 mechanically coupled to the window 16 by the apparatus 18. The motor 14 may be energized by a motor-driver 32 such as an H-bridge as will be recognized by those in the art. The motor-driver 32 may include two or more phases depending on the particular configuration of the motor 14, e.g. a two-phase direct-current brush type motor or a three-phase brushless motor. The system 30 may include a motion-sensor 34, for example a Hall-effect sensor, used to detect motion of the motor 14.

The system 30 may also include a controller 36 that is effectively in communication with the motor 14 via the motor-driver 32 and/or the motion-sensor 34. The controller 36 may include a processor (not specifically shown) such as a microprocessor or other control circuitry such as analog and/or digital control circuitry including an application specific integrated circuit (ASIC) for processing data as should be evident to those in the art. The controller 36 may include memory (not specifically shown), including non-volatile memory, such as electrically erasable programmable read-only memory (EEPROM) for storing one or more routines, thresholds, and captured data. The one or more routines may be executed by the processor to perform steps for operating the motor 14 based on signals received by the controller 36 from the motor-driver 32 and/or the motion-sensor 34.

In order to remove any slack present in the apparatus 18 prior to raising the window 16 so that the anti-pinch detection function or algorithm can be reliably enabled, the controller 36 is configured (e.g. programmed) to apply a slack-removal-signal 40 (Fig. 3) as part of or imbedded in a motor-voltage 42 to the motor 14 prior to operation of the motor 14 using a motor-operation-signal 44 to raise the window 16. The slack-removal-signal 40 is selected or configured to be particularly useful to remove slack from the apparatus 18 when a most-recent-operation of the motor 14 was effective to lower the window 16. It is noted that the slack-removal-signal 40 is a predetermined-waveform selected to be effective to operate the motor 14 in the first-direction 22 to take-up the slack in the apparatus 18, but not raise the window 16. That is, the slack-removal-signal 40 is effective to move the motor 14 when the motor is unloaded, but the torque output by the motor 14 when the slack-removal-signal 40 is applied is insufficient to move the window 16.

Fig. 3 illustrates a non-limiting example of the motor-voltage 42 that may be applied to the motor 14. As will be recognized by those in the art, the motor-driver 32 is typically operated to pulse-width-modulate (PWM) a supply-voltage 46 (e.g. a vehicle battery supply voltage B+) to the motor, so the effective value of the motor-voltage 42 will be something less than the supply-voltage 46. Accordingly, the slack-removal-signal 40 may be characterized by or defined by a duty-cycle 48. For example, if a voltage-value 50 of the supply-voltage 46 is fourteen Volts (14V) and the duty-cycle 48 of the slack-removal-signal 40 is 50%, then the motor-voltage 42 applied to the motor 14 is about seven Volts (7V), ignoring switching losses.

It is recognized that the battery supply voltage (the supply-voltage 46) in a typical vehicle is generally considered to be unregulated, and may vary from 13V to 16V. As such, it may be advantageous for the controller 36 to be configured to monitor the voltage-value 50 and adjust or determine the duty-cycle 48 used to generate the slack-removal-signal 40. That is, the duty-cycle 48 may be determined based on the voltage-value 50 of the supply-voltage 46 (e.g. B+) used to energize the motor 14.

If the controller 36 is configured to remove the slack immediately prior to operating the motor 14 to raise the window 16, it is preferable to minimize how much time is spent to remove the slack. As such, the slack-removal-signal 40 may be characterized by a signal-interval 52 (T0 in Fig. 3) selected long enough to assure that all slack is removed or taken-up, but short enough to avoid unnecessary wasting of time, ninety milliseconds (90ms) for example. If the signal-interval 52 is too long, the operator of the powered window may be annoyed by an unacceptable amount of delay. It is recognized that the apparatus 18 may wear over time so the amount of slack or lash may increase as the apparatus 18 ages. It is contemplated that on a periodic basis the signal-interval 52 may be temporarily (e.g. once every 100 instances of executing a predetermined configuration of the slack-removal-signal 40) extended to allow the system 30 to verify that an optimum value of the signal-interval 52 is being used. For example, motion-sensor 34 may be monitored while a typical or reduced amount of the motor-voltage 42 is being applied to the motor in order to determine how long it takes for the motor 14 to stop moving having presumable taken-up all slack from the apparatus 18.

While not subscribing to any particular theory, it is believed that the anti-pinch algorithm will be most reliable if current in the motor 14 is zero when the motor-operation-signal 44 is applied. As such, the slack-removal-signal 40 may include or may be followed by a pause-interval 54 after the signal-interval 52 and prior to operation of the motor 14 to raise the window 16. During the pause-interval 54 (T1) the motor-voltage 42 applied to the motor 14 is preferably zero so any current present in the motor 14 at the beginning of the pause-interval 54 is allow to decay to approximately zero. Testing suggests that for one motor configuration a suitable value for the pause-interval 54 is sixty milliseconds (60ms).

It is recognized that it is likely most preferable for the slack-removal-signal 40 to be characterized by or defined by both the duty-cycle 48 and a signal-interval 52 so the slack can be taken-up in the quickest and most reliable manner.

Accordingly, a window-anti-pinch system (the system 30), a controller 36 for the system 30, and a method of operating the system 30 is provided. The system 30 applies the slack-removal signal 40 either immediately following operation of the assembly 10 to lower the window, or immediately prior to operation of the assembly to raise the window, especially when the most recent operation of the assembly 10 was to lower the window 16. That is, the system 30 preferably applies the slack-removal-signal to the motor 14 prior to operation of the motor to raise the window 16 when a most-recent-operation of the motor 14 was effective to lower the window. To minimize the time necessary to remove the slack, the slack-removal-signal is advantageously a predetermined-waveform effective to operate the motor 14 in the first-direction 22 to take-up the slack but not raise the window 16. For example, by applying the slack removal signal 40 to the motor 14, the motor is driven in the first direction 26 in a manner sufficient to take up wide variations in the slack but not sufficient to move the window in the upward direction 20. This is due to the significant difference in torque between what is needed for slack removal versus what is needed for the upward motion 20 which requires higher motor torque. While the configuration of the assembly shown in Fig.1 is commonly referred to as a scissor type mechanism, the system 30 described herein is readily adaptable to other types of mechanisms that may have numerous individual sources of slack.

While this invention has been described in terms of the preferred embodiments thereof, it is not intended to be so limited, but rather only to the extent set forth in the claims that follow.

## Claims

1. A window-anti-pinch system (30) suitable to operate a powered-window (16) in a vehicle, said system (30) comprising:
a motor (14) coupled to a window (16) by an apparatus (18), said motor (14) operable to raise the window (16) when the motor (14) is operated in a first-direction (22) and lower the window (16) when the motor (14) is operated in a second-direction (26) opposite the first-direction (22), said apparatus (18) **characterized by** slack between the motor (14) and the window (16);
a controller (36) in communication with the motor (14), said controller (36) configured to apply a slack-removal-signal (40) to the motor (14) prior to operation of the motor (14) to raise the window (16) when a most-recent-operation of the motor (14) was effective to lower the window (16), wherein the slack-removal-signal (40) is a predetermined-waveform effective to operate the motor (14) in the first-direction (22) to take-up the slack but not raise the window (16).

2. The system (30) in accordance with claim 1, wherein the slack-removal-signal (40) is **characterized by** a signal-interval (52).

3. The system (30) in accordance with claim 2, wherein the slack-removal-signal (40) includes a pause-interval (54) after the signal-interval (52) and prior to operation of the motor (14) to raise the window (16).

4. The system (30) in accordance with any one of claims 1 to 3, wherein the slack-removal-signal (40) is **characterized by** a duty-cycle (48).

5. The system (30) in accordance with claim 4, wherein the duty-cycle (48) is determined based on a voltage-value (50) of a voltage-supply used to energize the motor (14).
